# DEMANDE DE BREVET EUROPEEN

(11) **EP 4 393 756 A1**
(43) Date de publication de la demande: **03.07.2024**
(21) Numéro de dépôt: 23215469.0
(22) Date de dépôt: 11.12.2023
(51) Int. Cl.: B60L 50/51, B60H 1/00, B60K 11/02, H02K 9/19, B60L 15/20, B60K 1/00, B60H 1/14

(54) **CIRCUIT DE CHAUFFAGE D'UN VÉHICULE AUTOMOBILE COMPRENANT UNE MACHINE ÉLECTRIQUE DE TRACTION**

(30) Priorité: 16.12.2022 FR 2213563
(71) Demandeur: VALEO EQUIPEMENTS ELECTRIQUES MOTEUR, 94046 Créteil Cedex (FR)
(72) Inventeur: EL BARAKA, Khadija, 94046 CRETEIL CEDEX (FR); JUGOVIC, Svetislav, 94046 CRETEIL CEDEX (FR)
(74) Mandataire: Valeo Powertrain Systems

(57) **Abrégé**

Procédé de chauffage d'un fluide de refroidissement d'une machine électrique (10) de traction d'un véhicule (EV) automobile, la machine électrique (10) comprenant, en plus du fluide de refroidissement :
- un stator (5) comprenant un enroulement électrique polyphasé (28), le stator (5) étant en échange thermique avec le fluide de refroidissement,
- un rotor (4), et
- un onduleur/redresseur (I) alimentant l'enroulement électrique polyphasé (28), l'onduleur/redresseur (I) comprenant une pluralité de cellules de commutation commandé par un dispositif de commande,
caractérisé en ce que le dispositif de commande de l'onduleur/redresseur (I) est configuré pour commander les cellules de commutation de manière à mettre l'enroulement électrique polyphasé (28) en court-circuit dans des conditions prédéterminées afin de chauffer le fluide de refroidissement.

## Description

### Domaine technique de l'invention

La présente invention concerne un circuit de chauffage d'un véhicule automobile comprenant une machine électrique de traction ainsi qu'au procédé de chauffage du fluide de refroidissement de la machine électrique.

### Arrière-plan technologique

L'invention s'applique par exemple lorsque le véhicule est un véhicule hybride ou électrique.
Une telle machine électrique comprend de façon connue :
- un fluide de refroidissement,
- un stator comprenant un enroulement électrique polyphasé, le stator étant en contact du fluide de refroidissement,
- un rotor, et
- un onduleur/redresseur alimentant l'enroulement électrique polyphasé, l'onduleur/redresseur comprenant une pluralité de cellules de commutation commandé par un dispositif de commande,

Cette machine électrique fait partie d'un ensemble de traction hybride ou électrique. La machine électrique est par exemple alimentée par une tension nominale de 48V ou plus de 100V, voire plus de 300V.

Dans le cas d'une machine électrique partageant un circuit de refroidissement commun avec un réducteur, par exemple une boite de vitesses, avec lequel elle est associée, il est connu que le fluide de refroidissement, notamment au démarrage, lorsqu'il est trop froid dégrade les performances de traction.

La faible température du fluide de refroidissement est également néfaste lorsque la machine électrique de traction participe au chauffage de l'habitacle.

Il existe un besoin pour permettre, notamment au démarrage du véhicule ou lorsque la température ambiante est basse, de chauffer le fluide de refroidissement d'une machine électrique de traction.

L'invention a pour objet de répondre à ce besoin et elle y parvient, selon l'un de ses aspects, à l'aide d'un procédé de chauffage d'un fluide de refroidissement d'une machine électrique de traction d'un véhicule automobile, la machine électrique comprenant, en plus du fluide de refroidissement :
- un stator comprenant un enroulement électrique polyphasé, le stator étant en échange thermique avec le fluide de refroidissement,
- un rotor, et
- un onduleur/redresseur alimentant l'enroulement électrique polyphasé, l'onduleur/redresseur comprenant une pluralité de cellules de commutation commandé par un dispositif de commande.

Le procédé de chauffage est caractérisé en ce que le dispositif de commande de l'onduleur/redresseur est configuré pour commander les cellules de commutation de manière à mettre l'enroulement électrique polyphasé en court-circuit dans des conditions prédéterminées afin de chauffer le fluide de refroidissement.

Ce procédé de chauffage à bas coût permet de réchauffement du fluide de refroidissement rapidement sans unité de chauffage externe supplémentaire.

Le fluide refroidissement est réchauffé par perte joule du stator et par perte de fer du stator lorsque l'enroulement polyphasé est en court-circuit.

Le dispositif de commande est par exemple intégré à l'unité de contrôle de la transmission du véhicule (« TCU » en anglais) ou à l'unité de contrôle moteur (« ECU » en anglais) ou à une autre unité de contrôle distincte. Le dispositif de commande met par exemple en oeuvre un ou plusieurs dispositifs de traitement numérique, comme des micro-contrôleurs. Le dispositif de commande est par exemple un circuit intégré de type ASIC (« Application-specific integrated circuit » en anglais).

L'intégralité de la commande des cellules de commutation commandables de l'onduleur/redresseur peut ne pas être réalisée par le dispositif de commande. D'autres organes de commande peuvent être impliqués pour agir sur l'onduleur/redresseur.

Selon un aspect de l'invention, tout ou partie de l'enroulement électrique polyphasé peut être mise en court-circuit.

La machine électrique est de traction lorsque qu'elle est reliée à la chaine de traction du véhicule.

Selon un aspect de l'invention, le fluide de refroidissement est de l'eau. En variante le fluide de refroidissement est de l'huile. En variante encore, le fluide de refroidissement est de l'air.

Selon un aspect de l'invention, la machine électrique comprend une première enceinte, notamment étanche, dans laquelle est circule le fluide de refroidissement et dans laquelle est disposé le stator. Le stator peut baigner dans le fluide de refroidissement. L'enroulement électrique polyphasé peut être en contact direct avec le fluide de refroidissement.

Selon un aspect de l'invention, la machine électrique peut comprendre une chambre de refroidissement dans laquelle est uniquement disposé le fluide de refroidissement. La chambre de refroidissement peut être disposée radialement autour du stator. La direction radiale s'entend par rapport à un axe de rotation de rotor.

Selon un aspect de l'invention, le fluide de refroidissement circule également dans un circuit de chauffage du véhicule automobile.

Le circuit de chauffage peut être un circuit de chauffage d'un habitacle du véhicule automobile.

Le fluide de refroidissement permet à la fois de refroidir la machine électrique et de chauffer l'habitacle du véhicule automobile.

L'utilisation mutualisée du fluide de refroidissement de la machine électrique permet de chauffer l'habitacle sans compresseur de climatisation, ni pompe à chaleur. Le procédé de chauffage est économe, elle en nécessite pas d'ajout d'unité de chauffage externe.

Dans le cas où le chauffage de l'habitacle est assuré par le fluide de refroidissement de la machine électrique il faut un certain temps de conduite afin de faire monter la température du liquide de refroidissement et ainsi obtenir de l'air chaud dans l'habitacle. Ce qui par grand froid peux mettre un temps non négligeable et diminuer le confort des occupants du véhicule automobile. L'enroulement électrique polyphasé en court-circuit permet de faire monter rapidement la température du liquide de refroidissement et ainsi obtenir de l'air chaud dans l'habitacle.

Selon un aspect de l'invention, le fluide de refroidissement circulant dans le circuit de chauffage est, de préférence, de l'eau ou de l'air.

Selon un aspect de l'invention, le dispositif de commande de l'onduleur/redresseur est configuré pour commander les cellules de commutation de manière à mettre l'enroulement électrique polyphasé en court-circuit lorsque le véhicule est stationné, notamment par programmation à distance.

Selon un aspect de l'invention, le fluide de refroidissement circule également dans un réducteur, par exemple une boite de vitesses, du véhicule automobile.

Le fluide de refroidissement permet à la fois de refroidir la machine électrique et le réducteur.

Selon un aspect de l'invention, le fluide de refroidissement circulant dans le réducteur, est, de préférence, de l'huile. Le fluide de refroidissement permet alors de graisser des composants du réducteur.

L'échauffement du fluide de refroidissement, notamment de l'huile, permet de réduire la friction dans la machine électrique et dans le réducteur associé. L'échauffement de l'huile permet également de limiter la variation de température dans des bagues intérieure et extérieure de roulement de la machine électrique et/ou du réducteur. La durée de vie des composants est allongée. Les bruits anormaux à des températures ambiantes plus froides où la viscosité de l'huile est plus importante sont évités.

Selon un aspect de l'invention, le réducteur peut comprendre une deuxième enceinte. La deuxième enceinte peut former un espace commun avec l'enceinte dans laquelle est disposée la machine électrique. Le fluide de refroidissement circule dans cet espace commun avec les composants du réducteur et le stator. Les composants du réducteur et le stator baignent dans le fluide de refroidissement.

En variante, le fluide de refroidissement circule dans le circuit de chauffage tandis que le réducteur est refroidi indépendamment du fluide de refroidissement. Dans cette configuration, le réducteur peut présenter un refroidissement dédié dans lequel circule un deuxième fluide de refroidissement dont la nature peut être identique ou différente de celle du fluide de refroidissement de la machine électrique. Le fluide de refroidissement de la machine électrique peut par exemple être de l'eau et le deuxième fluide de refroidissement peut être de l'huile.

Selon un aspect de l'invention, le rotor peut être refroidi par un refroidissement de rotor indépendant du refroidissement du stator.

Selon un aspect de l'invention, l'onduleur/redresseur est refroidi par un refroidissement d'onduleur/redresseur indépendant du refroidissement du stator.

Selon un aspect de l'invention, l'enroulement électrique polyphasé est mis en court-circuit lorsque le fluide de refroidissement est en dessous d'une température seuil. Par exemple 40 degrés, par exemple 60 degrés, par exemple 80 degrés, notamment lorsque le fluide de refroidissement est de l'huile.

Selon un aspect de l'invention, l'enroulement électrique polyphasé est mis en court-circuit lorsque le fluide de refroidissement est de l'huile et que son coefficient de viscosité est supérieur à valeur seuil donnée, par exemple supérieur à 1000 mm²/s.

Selon un aspect de l'invention, la température du fluide de refroidissement est obtenue à l'aide d'au moins un capteur de température. Le capteur de température peut être une ou plusieurs sondes de température, de type CTN ou CPN. En variante ou en complément, il peut s'agir d'un ou plusieurs thermocouples.

L'invention a également pour objet un système de chauffage d'un véhicule automobile comprenant une machine électrique de traction, la machine électrique comprenant :
- un fluide de refroidissement,
- un stator comprenant un enroulement électrique polyphasé, le stator étant en échange thermique avec le fluide de refroidissement,
- un rotor,
- un onduleur/redresseur alimentant l'enroulement électrique polyphasé, l'onduleur/redresseur comprenant une pluralité de cellules de commutation commandé par un dispositif de commande,

Le système de chauffage comprend également un circuit de chauffage d'un habitacle de véhicule automobile et/ou une batterie de véhicule automobile. Le circuit de chauffage est externe à la machine électrique.

Le dispositif de commande de l'onduleur/redresseur est configuré pour commander les cellules de commutation de manière à mettre l'enroulement électrique polyphasé en court-circuit dans des conditions prédéterminées afin de chauffer le fluide de refroidissement.

Selon un aspect de l'invention, le fluide de refroidissement de la machine électrique circule également dans le circuit de chauffage. Dans ce système de chauffage de véhicule, le fluide de refroidissement du stator est mutualisé et permet de chauffer l'habitacle. Dans ce système de chauffage, le fluide de refroidissement est de préférence de l'air ou de l'eau.

En variante; le fluide de refroidissement de la machine électrique ne circule pas dans le circuit de chauffage. Le fluide de refroidissement est en échange thermique avec le circuit de chauffage, notamment au moyen d'un échangeur thermique, par exemple fixé sur la première enceinte ou la deuxième enceinte. Dans ce système de chauffage, le fluide de refroidissement est de préférence de l'huile ou de l'eau.

Tout ce qui a été écrit précédemment en lien avec les éléments constitutifs du système de chauffage s'applique audit système de chauffage.

Selon un aspect de l'invention, le système de chauffage comprend en plus du circuit de chauffage, un circuit de refroidissement externe. Le circuit de chauffage peut être en dérivation du circuit de refroidissement externe.

Le circuit de refroidissement externe permet de refroidir le fluide de refroidissement à l'extérieur de la machine électrique sans chauffer l'habitacle.

Selon un aspect de l'invention, le circuit de refroidissement externe comprend un radiateur de refroidissement. Le radiateur de refroidissement permet de transférer de l'énergie thermique du fluide de refroidissement. Le radiateur de refroidissement peut coopérer avec un vase d'expansion.

Selon un aspect de l'invention, le circuit de chauffage comprend un radiateur de chauffage. Le radiateur de chauffage permet de transférer de l'énergie thermique du fluide de refroidissement vers l'habitacle.

Selon un aspect de l'invention, le circuit de chauffage présente une entrée fluidique et une sortie fluidique pour le fluide de refroidissement. L'entrée fluidique et la sortie fluidique peuvent être mutualisées entre le circuit de chauffage et le circuit de refroidissement.

Dans le cas où le fluide de refroidissement de la machine électrique circule également dans le circuit de chauffage, l'entrée fluidique du circuit de chauffage est une sortie fluidique de la machine électrique et la sortie fluidique du circuit de chauffage est une entrée fluidique de la machine électrique.

Dans le cas où le fluide de refroidissement de la machine électrique est en échange thermique avec le circuit de chauffage au moyen de l'échangeur thermique, l'entrée fluidique du circuit de chauffage est une sortie fluidique de l'échangeur thermique et la sortie fluidique du circuit de chauffage est une entrée fluidique de l'échangeur thermique.

Selon un aspect de l'invention, le radiateur de chauffage et/ou vers le radiateur de refroidissement sont disposés entre l'entrée fluidique et la sortie fluidique au sens du flux du fluide de refroidissement.

Selon un aspect de l'invention, le système de chauffage comprend un dispositif de mise en mouvement du fluide de refroidissement, par exemple une pompe, par exemple un ventilateur. Le dispositif de mise en mouvement du fluide de refroidissement peut être disposée à l'entrée fluidique et/ou à la sortie fluidique de la machine électrique.

Selon un aspect de l'invention, le système de chauffage comprend une soupape disposée entre la machine électrique et le circuit de chauffage. La soupape peut être disposée entre la machine électrique d'une part et d'autre part le circuit de chauffage et le circuit de refroidissement externe.

La soupape empêche le fluide de refroidissement de circuler entre la machine électrique et le circuit de chauffage dans certaines conditions prédéterminées. La soupape peut être pilotée électriquement. La soupape peut être autonome. La soupape peut être disposée à la sortie fluidique de la machine électrique.

Selon un aspect de l'invention, chaque cellule de commutation commandable peut comprendre un transistor à effet de champ. Il s'agit par exemple d'un transistor MOS. Ce transistor peut être réalisé en silicium.

Selon un aspect de l'invention, la machine électrique est par exemple une machine synchrone, par exemple une machine synchrone triphasée ou une machine synchrone dont l'enroulement électrique de stator définit un double système triphasé. L'enroulement électrique de stator est par exemple formé par des fils ou par des barres conductrices reliées les unes les autres.

Selon un aspect de l'invention, le rotor peut être un rotor à griffes. Ce rotor comprend alors une première et une deuxième roues polaires imbriquées, la première roue polaire définissant une série de griffes de forme globalement trapézoïdale, chaque griffe s'étendant axialement en direction de la deuxième roue polaire, la deuxième roue polaire définissant une série de griffes de forme globalement trapézoïdale, chaque griffe s'étendant axialement en direction de la première roue polaire. Un aimant permanent peut être reçu entre deux griffes consécutives circonférentiellement parlant pour le rotor.

En variante, le rotor peut être autre qu'un rotor à griffes, comprenant par exemple un paquet de tôles ou étant un rotor à cage.

Selon un aspect de l'invention, le rotor peut comprendre un nombre de paires de pôles quelconque, par exemple trois, quatre, six ou huit paires de pôles.

Selon un aspect de l'invention, La machine électrique peut présenter une puissance électrique nominale de 4 kW, 8 kW, 15 kW, 25 kW ou plus.

La machine électrique n'est pas nécessairement une machine synchrone, pouvant être une machine asynchrone.

L'invention a également pour objet un véhicule automobile, notamment à traction hybride, notamment à traction purement électrique, comprenant le système de chauffage tel que décrit précédemment.

Au sens de la présente demande, un véhicule désigne toute forme de mobilité à traction électrique ou hybride. « Véhicule » englobe ainsi un engin roulant sur terre via quatre, trois, deux roues ou tout autre nombre de roues, ou un engin se déplaçant dans les airs ou sur l'eau, voire dans l'espace. Un exemple de véhicule est une automobile.

Selon un aspect de l'invention, le véhicule comprend deux sous-réseaux entre lesquels est interposé un système de commutation définissant un convertisseur de tension continu/continu. Le convertisseur de tension continu/continu peut mettre en oeuvre des interrupteurs électroniques commandables, tels que des transistors en nitrure de galium (GaN), en carbure de silicium (SiC), ou en silicium. Le premier sous-réseau électrique, est par exemple celui connecté à l'onduleur/redresseur, et le deuxième sous-réseau électrique présente par exemple une tension nominale de 12V.

Selon un aspect de l'invention, le véhicule peut comprendre une batterie. La machine électrique peut être connectée à la batterie par l'onduleur/redresseur. La batterie peut avoir une tension nominale inférieure à 60V, étant par exemple égale à 48V ou à 52V. En variante, la batterie peut avoir une tension nominale supérieure à 200V, par exemple supérieure à 300V.

Dans le cas d'un véhicule à traction hybride, le véhicule comprend un moteur thermique. La machine électrique peut comprendre une poulie ou tout autre moyen de liaison vers moteur thermique du véhicule. La machine électrique est par exemple reliée, notamment via une courroie, à un vilebrequin du moteur thermique du véhicule. En variante, la machine électrique est reliée à d'autres emplacement du véhicule, par exemple à l'entrée d'une boîte de vitesses du point de vue du couple transitant vers les roues du véhicule, en sortie de la boîte de vitesses du point de vue du couple transitant vers les roues du véhicule, au niveau de la boîte de vitesses du point de vue du couple transitant vers les roues du véhicule.

L'invention pourra être mieux comprise à la lecture de la description qui va suivre d'un exemple non limitatif de mise en oeuvre de celle-ci et à l'examen du dessin annexé sur lequel :
[Fig.1] représente une vue schématique d'un exemple de véhicule automobile selon la présente invention,
[Fig.2] représente en coupe axiale et schématiquement un exemple de machine électrique dans lequel le fluide refroidissement de la machine est de l'air et à laquelle peut s'appliquer le procédé selon l'invention,
[Fig.3] représente en coupe axiale et schématiquement un exemple de machine électrique dans lequel le fluide refroidissement de la machine est de l'eau et à laquelle peut s'appliquer le procédé selon l'invention,
[Fig.4] représente en coupe axiale et schématiquement un exemple de machine électrique dans lequel le fluide refroidissement de la machine est de l'huile et à laquelle peut s'appliquer le procédé selon l'invention,
[Fig.5] représente en coupe axiale et schématiquement un exemple de machine électrique associé à un réducteur dans lequel le fluide refroidissement de la machine est de l'huile et à laquelle peut s'appliquer le procédé selon l'invention,
[Fig.6] représente schématiquement un exemple de système de chauffage selon l'invention dans lequel le fluide de refroidissement de la machine circule dans un circuit de chauffage de l'habitacle, et
[Fig.7] représente schématiquement un exemple de système de chauffage selon l'invention dans lequel le fluide de refroidissement de la machine est en échange thermique avec le circuit de chauffage de l'habitacle,

Dans l'exemple considéré, le véhicule est un véhicule à traction purement électrique EV, ou un véhicule à traction hybride, comprenant des roues 3 et la machine électrique 10. La machine électrique est configurée pour entraîner au moins indirectement au moins une des roues 3.

Dans l'exemple considéré, la machine électrique 10 permet de mouvoir seule le véhicule EV et est implantée sur un essieu arrière 2 entre une roue arrière 3 d'un part et d'autre part un réducteur 30. Le réducteur comprend ici un différentiel 31. Le réducteur peut par exemple être une boite de vitesses.

En variante, la machine électrique 10 pourra être implantée sur l'essieu avant, non représenté. En variante encore, la machine électrique 10 pourra être implantée dans au moins une roue 3. On utilise notamment une machine électrique 10 dans chaque roue arrière 3.

En variante non représenté, dans le cas d'un véhicule à traction hybride, le véhicule comprend un moteur thermique auquel est reliée la machine électrique 10. La machine électrique est par exemple reliée à un vilebrequin du moteur thermique via une courroie.

Dans l'exemple décrit, la machine électrique 10 comprend un rotor 4 apte à tourner autour d'un axe de rotation de rotor et un stator 5. Le stator comprend un enroulement électrique polyphasé 28. Le stator 5 est en échange thermique avec le fluide de refroidissement. Différentes alternatives de fluide de refroidissement et de machines électrique seront décrites en référence aux figures suivantes.

L'enroulement électrique polyphasé et éventuellement le rotor en fonction de sa nature sont alimentés via un composant électronique de puissance 9 comprenant un onduleur/redresseur I. L'onduleur/redresseur I comprend une pluralité de cellules de commutation. Chaque cellule de commutation comprend par exemple un transistor à effet de champ. Il s'agit par exemple d'un transistor MOS. Ce transistor peut être réalisé en silicium.

Dans l'exemple considéré, la pluralité de cellules de commutation est commandée par un dispositif de commande. Le dispositif de commande est par exemple intégré à l'unité de contrôle de la transmission du véhicule (« TCU » en anglais) ou à l'unité de contrôle moteur (« ECU » en anglais) ou à une autre unité de contrôle distincte. Le dispositif de commande met par exemple en oeuvre un ou plusieurs dispositifs de traitement numérique, comme des micro-contrôleurs. Le dispositif de commande est par exemple un circuit intégré de type ASIC (« Application-specific integrated circuit » en anglais).

Dans l'exemple considéré, le véhicule EV comprend deux sous-réseaux entre lesquels est interposé un système de commutation définissant un convertisseur de tension continu/continu 7. Le convertisseur de tension continu/continu 7 comprend par exemple des transistors qui peuvent être du même type que ceux mentionnés précédemment. Le premier sous-réseau électrique 6, est connecté à l'onduleur/redresseur I, et le deuxième sous-réseau électrique 8 présente par exemple une tension nominale de 12V.

Dans l'exemple considéré, le véhicule EV comprend une batterie d'alimentation, ici haute tension et de préférence rechargeable, pour fournir de l'énergie électrique à la machine électrique 10. La batterie peut avoir une tension nominale supérieure à 200V, par exemple supérieure à 300V. La batterie B peut avoir une tension nominale inférieure à 60V, étant par exemple égale à 48V ou à 52V. La batterie d'alimentation appartient au premier réseau électrique. L'enroulement électrique polyphasé du stator appartient au premier réseau électrique 6. Le premier sous-réseau électrique 6 peut encore comprendre ou non un ou plusieurs consommateurs.

Dans l'exemple considéré, le deuxième sous-réseau 8 présente par exemple une tension nominale de 12V. Ce deuxième sous- réseau électrique 8 peut comprendre une batterie 40 ainsi que des consommateurs non représentés, pouvant être choisi(s) dans la liste suivante non limitative: système d'éclairage, système de direction assistée électrique, système de freinage, système de climatisation ou système d'autoradio.

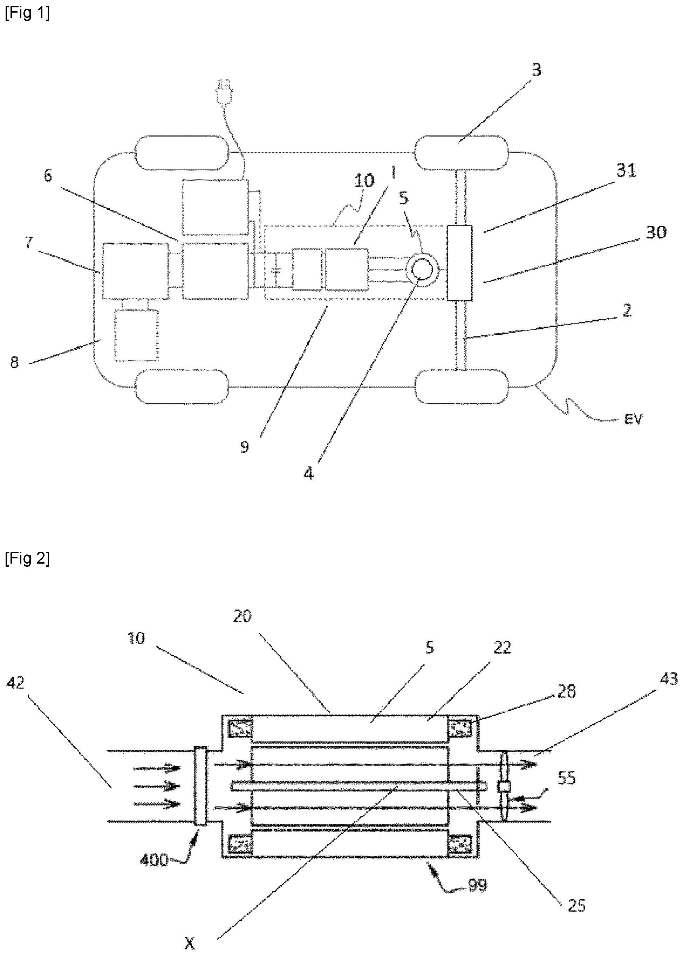

Un exemple de machine électrique 10 est décrit en référence à la figure 2. Il s'agit ici d'une machine électrique 10 comporte un carter 20 portant intérieurement le stator 5 entourant le rotor 4 solidaire d'un arbre de rotor 21. Cet arbre de rotor 21 traverse centralement le rotor 4. Le corps 22 et le rotor 1 sont de forme annulaire autour d'un axe X de rotation de l'arbre du rotor 21 et du rotor 4.

Dans l'exemple considéré, la machine électrique comprend une première enceinte 23 formée par le carter 20 dans laquelle est circule le fluide de refroidissement qui est ici de l'air. Le stator 5 est disposé dans cette enceinte 23. Le stator 5 est en contact direct avec l'air.

Dans l'exemple considéré, le stator 5 comporte un corps 22 portant l'enroulement électrique polyphasé 28. L'enroulement électrique polyphasé 28 traverse le corps et s'étend en saillie axiale de part et d'autre de ce corps 30.

Dans l'exemple considéré, un entrefer existe entre la périphérie externe du rotor 4 de forme annulaire et la périphérie interne du corps 30 du stator 3.

Dans l'exemple considéré, l'enroulement électrique polyphasé 28 est composé de plusieurs phases, comportant chacune au moins un enroulement. Les sorties de ces enroulements sont reliées électriquement à l'onduleur/redresseur I, non représenté à la figure 2.

Dans l'exemple considéré, la machine électrique 10 présente une entrée fluidique 42 et une sortie fluidique 43 pour le fluide de refroidissent pour qu'il entre et sorte de l'enceinte 23.

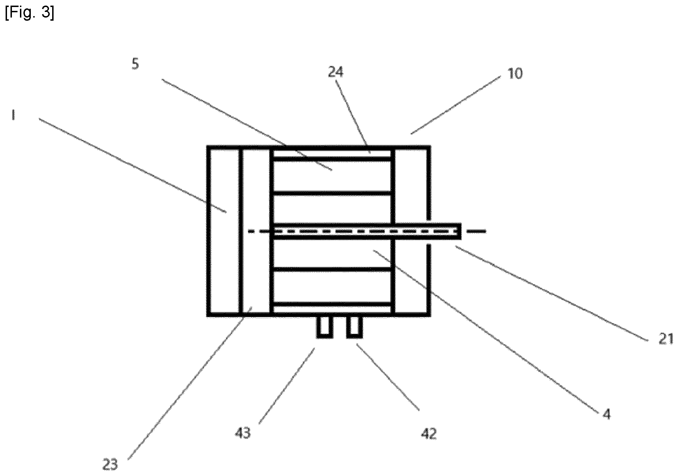

Un autre exemple de machine électrique 10 est décrit en référence à la figure 3. Cette machine électrique 10 diffère de celle de la figure 2 en ce que le fluide de refroidissement est un liquide de refroidissement et en particulier de l'eau.

Dans l'exemple considéré, la machine électrique comprend une chambre de refroidissent 24 disposée radialement autour du stator 5. L'entrée fluidique 42 et la sortie fluidique 43 sont en connexion fluidique avec la chambre de refroidissement 24.

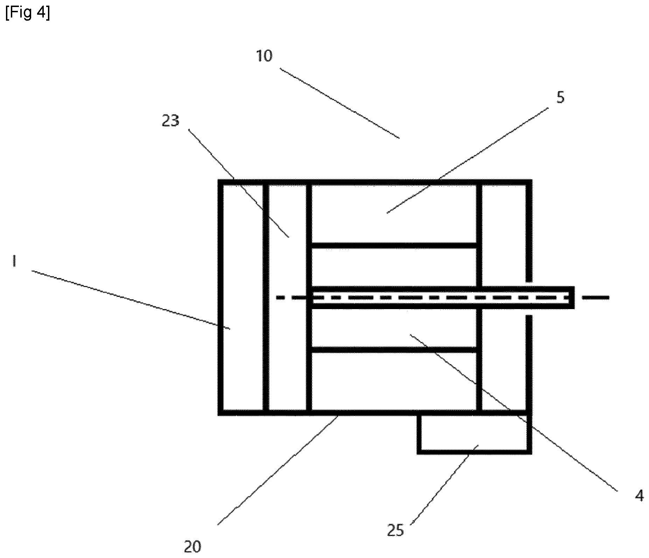

Un autre exemple de machine électrique 10 est décrit en référence à la figure 4. Cette machine électrique 10 diffère de celle de la figure 3 en ce que le fluide de refroidissement est de l'huile. L'huile et le stator 5 sont disposés dans l'enceinte 23. L'huile est en contact direct avec le stator 5, notamment avec l'enroulement électrique polyphasé 28.

Dans l'exemple considéré, la machine électrique 10 ne comprend pas d'entrée fluidique ni de sortie fluidique. Un échangeur thermique 25 est prévu dans la machine électrique pour évacuer les calories de l'huile lié à la chaleur du stator et/ou du rotor. L'échangeur thermique 25 est fixé sur le carter 20.

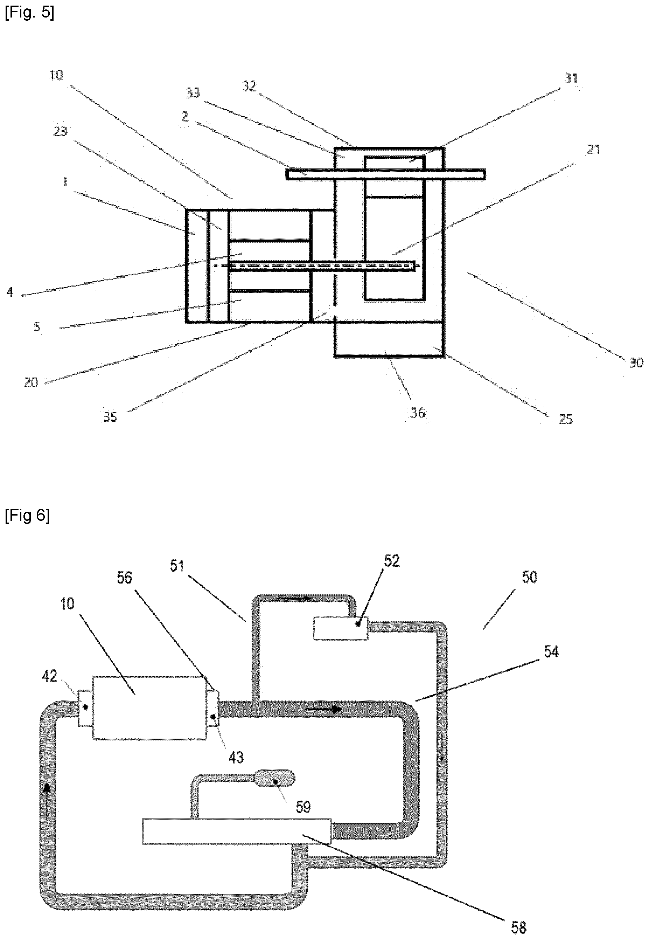

Un autre exemple de machine électrique 10 est décrit en référence à la figure 5. La machine électrique 10 est associée au réducteur 30.

Dans l'exemple considéré, le réducteur comprend une enceinte 33 formée par un carter de réducteur 32. Le différentiel 31 est logée dans la deuxième enceinte et est en prise avec l'essieu arrière 2, par exemple. L'essieu arrière 2 peut traverser le carter de réducteur 32. L'arbre du rotor 21 s'étend dans la première enceinte 23 et dans la deuxième enceinte 33.

L'arbre du rotor 21 est en prise avec des composants du réducteur, ici des roues dentées, non représentées, du réducteur 30.

Dans l'exemple considéré, la deuxième enceinte 33 forme un espace commun avec la première enceinte 23 dans laquelle est disposée la machine électrique 10 et le fluide de refroidissement, qui est ici de l'huile, circule dans cet espace commun avec les composants du réducteur 30 et le stator 5. L'huile permet à la fois de refroidir la machine électrique 10 et le réducteur 30.

Dans l'exemple considéré, un ou plusieurs passages 35 sont prévu entre la première enceinte 23 et la deuxième enceinte 33.

Dans l'exemple considéré, l'échangeur thermique 25 est fixé sur le carter du réducteur et une pompe de réducteur 35 est prévue pour asperger l'huile sur les composants du réducteur et/ou sur le stator 5 et/ou sur le rotor 4 et/ou sur l'onduleur/redresseur I.

Dans l'exemple considéré à la figure 5, le dispositif de commande, non représenté, de l'onduleur/redresseur I est configuré pour mettre en oeuvre un procédé de chauffage de l'huile. Le dispositif de commande est configuré pour commander les cellules de commutation de manière à mettre l'enroulement électrique polyphasé 28 en court-circuit dans des conditions prédéterminées afin de chauffer le fluide de refroidissement, ici l'huile.

Dans l'exemple considéré, l'huile est réchauffée par perte joule du stator 5 et par perte de fer du stator 5 lorsque l'enroulement polyphasé est en court-circuit.

Dans l'exemple considéré, tout ou partie de l'enroulement électrique polyphasé 28 peut être mise en court-circuit.

Dans l'exemple considéré, l'huile circulant dans la première enceinte 23 et dans la deuxième enceinte 33 permet alors de graisser des composants du réducteur. L'échauffement de l'huile permet de réduire la friction dans la machine électrique et dans le réducteur associé. L'échauffement de l'huile permet également de limiter la variation de température dans des bagues intérieure et extérieure de roulement de la machine électrique et/ou du réducteur. La durée de vie des composants est allongée. Les bruits anormaux à des températures ambiantes plus froides où la viscosité de l'huile est plus importante sont évités.

Dans l'exemple considéré, l'enroulement électrique polyphasé 28 est mis en court-circuit lorsque l'huile est en deçà d'une température seuil, par exemple 40 degrés, par exemple 60 degrés, par exemple 80 degrés ou lorsque le coefficient de viscosité est supérieur à valeur seuil donnée.

Il est représenté à la figure 6 un système de chauffage 50 d'un véhicule automobile comprenant une machine électrique 10 dont le fluide de refroidissement est de l'eau ou de l'air. Par exemple celle des figures 2 et 3. Le système de refroidissement 50 comprend également un circuit de chauffage 51 d'un habitacle de véhicule automobile.

Dans l'exemple considéré, le fluide de refroidissement de la machine électrique 10 circule également dans le circuit de chauffage 51. Le fluide de refroidissement, ici de l'air ou de l'eau, est mutualisé et permet de chauffer l'habitacle.

L'utilisation mutualisée du fluide de refroidissement de la machine électrique permet de chauffer l'habitacle sans compresseur de climatisation, ni pompe à chaleur. Le procédé de chauffage est économe, elle en nécessite pas d'ajout d'unité de chauffage externe.

Dans l'exemple considéré, la mise en court-circuit de l'enroulement électrique polyphasé de la machine électrique 10 peut permettre de chauffer l'habitacle, en particulier lorsque le véhicule est stationné, notamment par programmation à distance.

Dans le cas où le chauffage de l'habitacle est assuré par le fluide de refroidissement de la machine électrique il faut un certain temps de conduite afin de faire monter la température du liquide de refroidissement et ainsi obtenir de l'air chaud dans l'habitacle. Ce qui par grand froid peux mettre un temps non négligeable et diminuer le confort des occupants du véhicule automobile. L'enroulement électrique polyphasé en court-circuit permet de faire monter rapidement la température du liquide de refroidissement et ainsi obtenir de l'air chaud dans l'habitacle.

Dans l'exemple considéré, le circuit de chauffage 51 comprend un radiateur de chauffage 52. Le radiateur de chauffage 52 permet de transférer de l'énergie thermique du fluide de refroidissement vers l'habitacle. Le radiateur de chauffage 52 est externe et distant de la machine électrique 10.

Dans l'exemple considéré, le système de chauffage 50 comprend en plus du circuit de chauffage 51, un circuit de refroidissement externe 54. Le circuit de chauffage 52 peut être en dérivation du circuit de refroidissement externe 54. Le circuit de refroidissement externe 54 permet de refroidir le fluide de refroidissement à l'extérieur de la machine électrique 10 sans chauffer l'habitacle.

Dans l'exemple considéré, le circuit de chauffage 51 présente une entrée fluidique et une sortie fluidique pour le fluide de refroidissement. L'entrée fluidique du circuit de chauffage 51 est la sortie fluidique de la machine électrique 43 et la sortie fluidique du circuit de chauffage est l'entrée fluidique de la machine électrique 42.

L'entrée fluidique 42 de la machine électrique 10 reçoit le fluide de refroidissement du circuit de chauffage 51 et/ou du circuit de refroidissement externe 54.

Dans l'exemple considéré, le système de chauffage 50 comprend un dispositif de mise en mouvement du fluide de refroidissement dans les circuits de chauffage et de refroidissement.

Le dispositif de mise en mouvement peut être une pompe, notamment située à l'entrée fluidique 42 de la machine électrique 10 lorsque le fluide de refroidissement est de l'eau.

Le dispositif de mise en mouvement peut être un ventilateur 55, notamment située à la sortie fluidique 43 de la machine électrique 10 lorsque le fluide de refroidissement est de l'air. Ce ventilateur 55 est visible sur la figure 2.

Dans l'exemple considéré, le système de chauffage 50 comprend une soupape 56 disposée entre la machine électrique 10 et le circuit de chauffage 51. La soupape 56 empêche le fluide de refroidissement de circuler entre la machine électrique et le circuit de chauffage dans certaines conditions prédéterminées.

Dans l'exemple considéré, le circuit de refroidissement externe 54 comprend un radiateur de refroidissement 58. Le radiateur de refroidissement permet de transférer de l'énergie thermique du fluide de refroidissement. Le radiateur de refroidissement coopère ici avec un vase d'expansion 59.

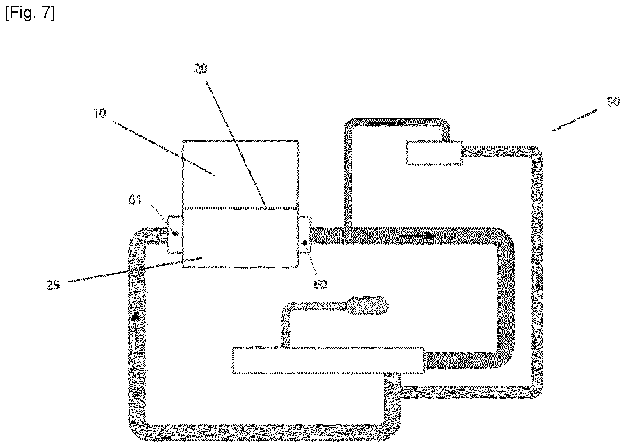

Il est également présenté à la figure 7 un système de chauffage 50. Le système de chauffage diffère de celui illustré à la figure 6 en ce que le fluide de refroidissement de la machine électrique 10 ne circule pas dans le circuit de chauffage 51.

Dans l'exemple considéré, le fluide de refroidissement, ici de préférence de l'huile, est en échange thermique avec le circuit de chauffage 51, ici au moyen de l'échangeur thermique 25, par exemple fixé sur le carter 20 de la machine électrique 10.

Dans l'exemple considéré, l'entrée fluidique du circuit de chauffage 51 est une sortie fluidique 60 de l'échangeur thermique 25 et la sortie fluidique du circuit de chauffage 51 est une entrée fluidique 61 de l'échangeur thermique 25.

Les systèmes de chauffage 50 des figures 6 et 7 peuvent appartenir au véhicule décrit à la figure 1.

## Revendications

1. Procédé de chauffage d'un fluide de refroidissement d'une machine électrique (10) de traction d'un véhicule (EV) automobile, la machine électrique (10) comprenant, en plus du fluide de refroidissement :
- un stator (5) comprenant un enroulement électrique polyphasé (28), le stator (5) étant en échange thermique avec le fluide de refroidissement,
- un rotor (4), et
- un onduleur/redresseur (I) alimentant l'enroulement électrique polyphasé (28), l'onduleur/redresseur (I) comprenant une pluralité de cellules de commutation commandé par un dispositif de commande,
**caractérisé en ce que** le dispositif de commande de l'onduleur/redresseur (I) est configuré pour commander les cellules de commutation de manière à mettre l'enroulement électrique polyphasé (28) en court-circuit dans des conditions prédéterminées afin de chauffer le fluide de refroidissement.

2. Procédé de chauffage selon la revendication 1, **caractérisé en ce que** le fluide de refroidissement circule également dans un circuit de chauffage (51) du véhicule automobile (EV).

3. Procédé de chauffage selon l'une quelconque des revendications 1 et 2, **caractérisé en ce que** le fluide de refroidissement circule également dans un réducteur (30), par exemple une boite de vitesses, du véhicule automobile (EV).

4. Procédé de chauffage selon l'une quelconques des revendications précédentes, **caractérisé en ce que** l'enroulement électrique polyphasé (28) est mis en court-circuit lorsque le fluide de refroidissement est en dessous d'une température seuil, par exemple 40 degrés, par exemple 60 degrés, par exemple 80 degrés notamment lorsque le fluide de refroidissement est de l'huile.

5. Système de chauffage (50) d'un véhicule automobile (EV) comprenant une machine électrique (10) de traction, la machine électrique (10) comprenant :
- un fluide de refroidissement,
- un stator (5) comprenant un enroulement électrique polyphasé (28), le stator (5) étant en échange thermique avec le fluide de refroidissement,
- un rotor (4),
- un onduleur/redresseur (I) alimentant l'enroulement électrique polyphasé (28), l'onduleur/redresseur (I) comprenant une pluralité de cellules de commutation commandé par un dispositif de commande,
le système de chauffage comprenant également un circuit de chauffage (51) d'un habitacle de véhicule automobile,
le fluide de refroidissement de la machine électrique (10) circulant également dans le circuit de chauffage (51) de l'habitacle ou le fluide de refroidissement étant en échange thermique avec le circuit de chauffage (51)
**caractérisé en ce que** le fluide de refroidissement est chauffé selon le procédé de chauffage de l'une quelconque des revendications précédentes.

6. Système de chauffage (50) selon la revendication précédentes, **caractérisé en ce que** le système de chauffage comprend en plus du circuit de chauffage (51), un circuit de refroidissement (54) externe, le circuit de chauffage (51) étant en dérivation du circuit de refroidissement (54) externe.

7. Système de chauffage (50) selon la revendication précédente, **caractérisé en ce que** le circuit de refroidissement (54) externe comprend un radiateur de refroidissement (58) et **en ce que** circuit de chauffage comprend un radiateur de chauffage (52).

8. Système de chauffage (50) selon la revendication précédente, **caractérisé en ce que** le système de chauffage (50) comprend une soupape (56), notamment pilotée électriquement, disposée entre la machine électrique (10) et le circuit de chauffage (51).

9. Véhicule automobile (EV), notamment à traction hybride, notamment à traction purement électrique, **caractérisé en ce qu'**il comprend un système de chauffage (50) selon l'une quelconque des revendications 5 à 8.
